Europäisches Patentamt

European Patent Office

Office européen des brevets

(19)

(11) Veröffentlichungsnummer: **0 155 932**
**B1**

(12) **EUROPÄISCHE PATENTSCHRIFT**

(45) Veröffentlichungstag der Patentschrift:
29.11.89

(51) Int. Cl.⁴: **H 02 P 8/00**

(21) Anmeldenummer: **85890066.5**

(22) Anmeldetag: **19.03.85**

(54) Schaltungsanordnung.

(30) Priorität: 20.03.84 AT 938/84
04.10.84 DE 3436433

(43) Veröffentlichungstag der Anmeldung:
25.09.85 Patentblatt 85/39

(45) Bekanntmachung des Hinweises auf die Patenterteilung:
29.11.89 Patentblatt 89/48

(84) Benannte Vertragsstaaten:
AT CH DE FR GB IT LI SE

(56) Entgegenhaltungen:
DE-A- 2 933 658
DE-A- 2 953 307
DE-A- 3 014 227
US-A- 4 140 956

**Die Akte enthält technische Angaben, die nach dem Eingang der Anmeldung eingereicht wurden und die nicht in dieser Patentschrift enthalten sind.**

(73) Patentinhaber: **VOEST-ALPINE AUTOMOTIVE Gesellschaft mbh, Muldenstrasse 5, A-4020 Linz (AT)**

(72) Erfinder: **Augesky, Christian, Dipl.-Ing., Innstrasse 25/3/4/18, A-1200 Wien (AT)**

(74) Vertreter: **Matschnig, Franz, Dipl.-Ing., Siebensterngasse 54 Postfach 452, A-1071 Wien (AT)**

ACTORUM AG

### Beschreibung

Die Erfindung bezieht sich auf eine Schaltungsanordnung zur Ansteuerung eines Unipolar-Schrittmotors mit zwei Halbwicklungen je Phase, bei welchem jede Halbwicklung jeder Phase in Serie mit einem gesteuerten Schalter, dem eine Freilaufdiode parallelgeschaltet ist, an der Motor-Speisespannung liegt, wobei jede Serienschaltung Halbwicklung-Schalter einen Stromfühler, insbesondere einen Serienwiderstand für den Motorstrom aufweist, die Ausgänge der Stromfühler je mit einem der beiden Eingänge eines Komparators verbunden sind, wobei einem der Eingänge ein Bezugssignal zugeführt ist und der Ausgang des Komparators mit den Steuereingängen der bezüglich eines Steuersignales gegenphasig schaltenden gesteuerten Schalter verbunden ist (siehe z.B. US-A-4 140 956).

Schaltungsanordnungen zur Ansteuerung der beiden Halbwicklungen eines unipolaren Schrittmotors unter Verwendung gesteuerter Schalter sind z.B. aus dem Artikel «Schrittmotoren-Aufbau, Funktionsweise und Anwendung, H. Kraus, G. Heine, Firmendruckschrift Nr. 211 der Berger, Lahr Ges.m.b.H., 1981, bekannt. Zwar ist bei unipolaren Schrittmotoren die auf das Volumen bezogene Leistung kleiner als bei bipolaren Motoren, doch ist auch der Schaltungsaufwand zur Ansteuerung des Motors geringer, sodaß besonders bei geringen Motorleistungen gerne die unipolare Bauart Verwendung findet.

Schrittmotoren bieten als Stellmotoren den Vorteil, daß bei entsprechender Ansteuerung eine genau reproduzierbare Einstellung möglich ist, sodaß meist auf eine Rückmeldung verzichtet werden kann. Die Grenzen der reproduzierbaren Einstellung sind durch die mechanische Last und die Schrittfrequenz gegeben. Bei zu hoher mechanischer Last und/oder zu hoher Schrittfrequenz können Schritte verlorengehen, was in den meisten Anwendungsfällen der Regel- und Steuertechnik nicht zulässig ist.

Man hat daher meist sehr aufwendige Steuerschaltungen entworfen, die einen gewissen Verlauf des Magnetisierungsstroms in den Motorwicklungen sicherstellen sollen. Die Problematik liegt in der Zeitkonstante der Spulen, die für einen raschen Stromanstieg eine hohe Betriebsspannung erfordert und in den hohen Selbst- bzw. Gegeninduktionsspannungen, die während der Schaltvorgänge auftreten. So wird z.B. bei Schaltungen der eingangs erwähnten Art die nach dem Abschalten einer Spule in dieser verbleibende Energie mittels Zenerdioden vernichtet. Aus den oberwähnten Gründen versucht man oft, einen möglichst sinusförmigen Verlauf des Magnetisierungsstromes zu erhalten. Die hiezu bisher bekannten Schaltungen sind jedoch mit sehr hohem Aufwand verbunden.

Aus der DE-A-2 944 355 ist eine Schaltung bekannt geworden, bei welcher eine gesteuerte Stromquelle vorliegt, die im wesentlichen aus einem Komparator, einem Flipflop und einem Leistungstransistor besteht. Es wird bloß ein einziger Meßwiderstand im gemeinsamen Emitterkreis der Schalttransistoren verwendet, die als Leistungsschalter den Magnetisierungsstrom umschalten. Die Stromquelle arbeitet nach dem Prinzip der Abwärtsregelung; eine Diode im Kollektorkreis des Leistungstransistors ist als Freilaufdiode eingesetzt.

Im Gegensatz zur Anmeldung dienen die beiden Schalttransistoren nicht zur Steuerung des Stromes in der Phasenwicklung. Die Transistorschalter leiten dem angewählten Schritt entsprechend und schalten während der Dauer eines Schrittes nicht um. Daher ist der Schaltungsaufwand für die Endstufe sehr groß. Die Ansteuerung erfolgt quasi-analog über gewichtete Widerstände; zusätzlich ist eine digitale Stromrichtungsumschaltung vorgesehen. Außerdem muß die in den Wicklungen gespeicherte Energie mittels eigener Begrenzer vernichtet werden.

Eine Schaltungsanordnung der eingangs genannten Art, bei welcher die beiden Schalttransistoren zur Steuerung des Stromes in der Phasenwicklung herangezogen sind, ist der US-A-4 140 956 zu entnehmen. Der Umstand, daß die nach dem Abschalten des Stromes in den Halbspulen gespeicherte Energie verlorengeht ist besonders dann nachteilig, wenn wegen begrenzter Raumverhältnisse und hoher Umgebungstemperaturen ein möglichst hoher Wirkungsgrad der Schaltung gefordert wird.

Ziel der Erfindung ist die Beseitigung dieses Nachteils. Dieses Ziel läßt sich mit einer Schaltungsanordnung der eingangs genannten Art erreichen, bei welcher erfindungsgemäß parallel zu der Parallelschaltung der beiden Serienschaltungen erste Halbwicklungen – erster gesteuerter Schalter bzw. zweite Halbwicklung – zweiter gesteuerter Schalter ein Kondensator liegt und dieser über eine Diode an die Speisespannung des Motors gelegt ist.

Bei negativem Stromfluß in einer Halbwicklung wird zufolge der magnetischen Kopplung der beiden Halbwicklungen der Kondensator zusätzlich aufgeladen, wobei die Diode den Kondensator von der Speisespannung trennt. Es kommt zu einer Spannungsüberhöhung am Kondensator und hiedurch einerseits zu einer weitgehenden Ausnutzung der in den Halbwicklungen gespeicherten Energie und andererseits zu einem rascheren Umschalten. Hiedurch läßt sich insbesondere bei hohen Schaltfrequenzen die Leistungsbilanz erheblich verbessern.

Die dynamische Schalthysterese des Komparators kann am einfachsten durch ein in seinem Rückkopplungszweig liegendes RC-Glied festgelegt werden.

Um die Endstufen der Schaltungsanordnung vor Zerstörung durch Überspannungen zu schützen, die z.B. bei Leitungsunterbrechungen auftreten können, ist es anzuraten, daß die an den gesteuerten Schaltern liegenden Enden der Motorwicklungen über Dioden an eine gegen Masse geschaltete Serienschaltung einer Referenzspannungsquelle, vorzugsweise einer Zenerdiode und eines Meßwiderstandes gelegt sind, wobei das Meßsignal des Meßwiderstandes einem Eingang eines weiteren, zweiten Komparators zugeführt ist, an dessen anderen Eingang eine Bezugsspannung gelegt ist, und das Ausgangssignal des zweiten Komparators als Sperrsignal Sperreingängen der Ansteuerschaltungen der Endstufenschalter zugeführt ist. Eine derartige Schaltung ermöglicht bei geringem Schaltungsaufwand ein zuverlässiges Sperren der Endstufen.

Eine zweckmäßige Weiterbildung der Erfindung zeichnet sich dadurch aus, daß ein dritter Komparator vorgesehen ist, dessen einem (nicht invertierenden) Eingang die Ausgangsspannung des zweiten Komparators zugeführt ist, wobei dieser Eingang über die Serienschaltung eines Widerstandes und eines Kondensators an Masse liegt, sowie über einen Widerstand an die Betriebsspannung gelegt ist, wogegen an dem anderen (invertierenden) Eingang des dritten Komparators eine Bezugsspannung gelegt ist und die Ausgangsspannung des zweiten Komparators und die Ausgangsspannung des zweiten Komparators einer ODER-Schaltung zugeführt sind, deren Ausgangssignal den Ansteuerschaltungen als Sperrsignal zugeführt ist. Die Verwendung eines zweiten Komparators ermöglicht die Einführung einer längeren Zeitkonstante für den Abfall des Sperrsignales.

Die Zeitkonstante des ersten Komparators kann in einfacher Weise dadurch realisiert werden, daß der zweite Komparator in seinem Gegenkopplungszweig ein Serien-RC-Glied aufweist.

Es trägt zur Erhöhung der Sicherheit bei, wenn die Zeitkonstante des mit der Betriebsspannung verbundenen, an dem nicht invertierenden Eingang des dritten Komparators liegenden Widerstandes und des Kondensators groß ist gegen die Zeitkonstante des ersten Komparators.

Um ein rasches Entladen und langsames Laden des die Zeitkonstante des dritten Komparators mitbestimmenden Kondensators zu ermöglichen, empfiehlt es sich, wenn der Wert des Widerstandes der Serienschaltung am nicht invertierenden Eingang des dritten Komparators klein ist gegen den Wert des zur Betriebsspannung führenden Widerstandes an diesem Eingang.

Ein Sperren der Endstufen bei zu großem Abfall der Betriebsspannung läßt sich dadurch erreichen, daß die Bezugsspannung des zweiten Komparators von einem Spannungsteiler gebildet ist, der an Masse bzw. über eine Zenerdiode an der Betriebsspannung liegt, wobei diese Zenerdiode überdies mit einem die Bezugsspannung des dritten Komparators bildenden Spannungsteiler und mit dem zum nicht invertierenden Eingang dieses Komparators führenden Widerstand verbunden ist.

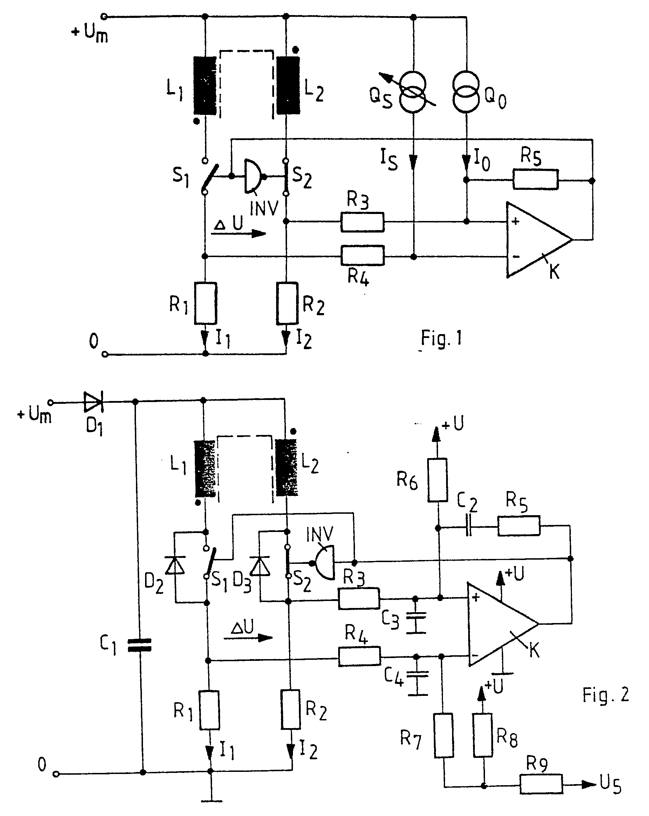

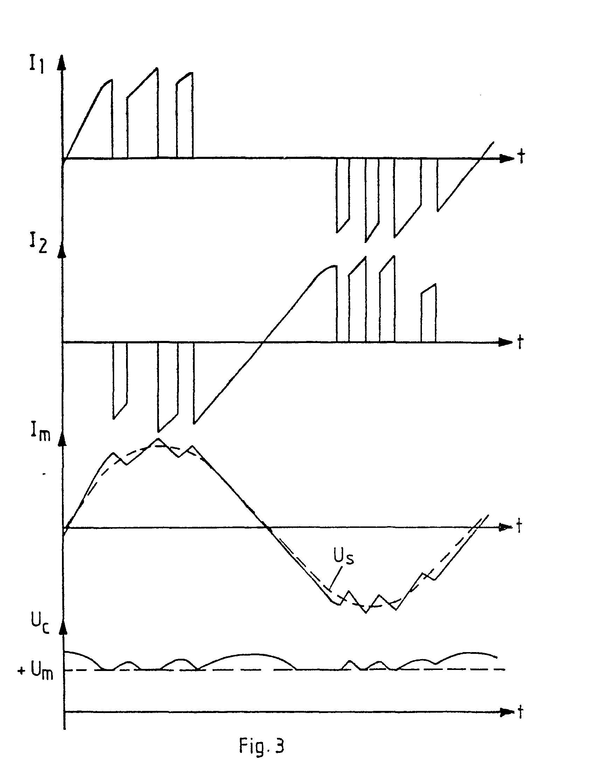

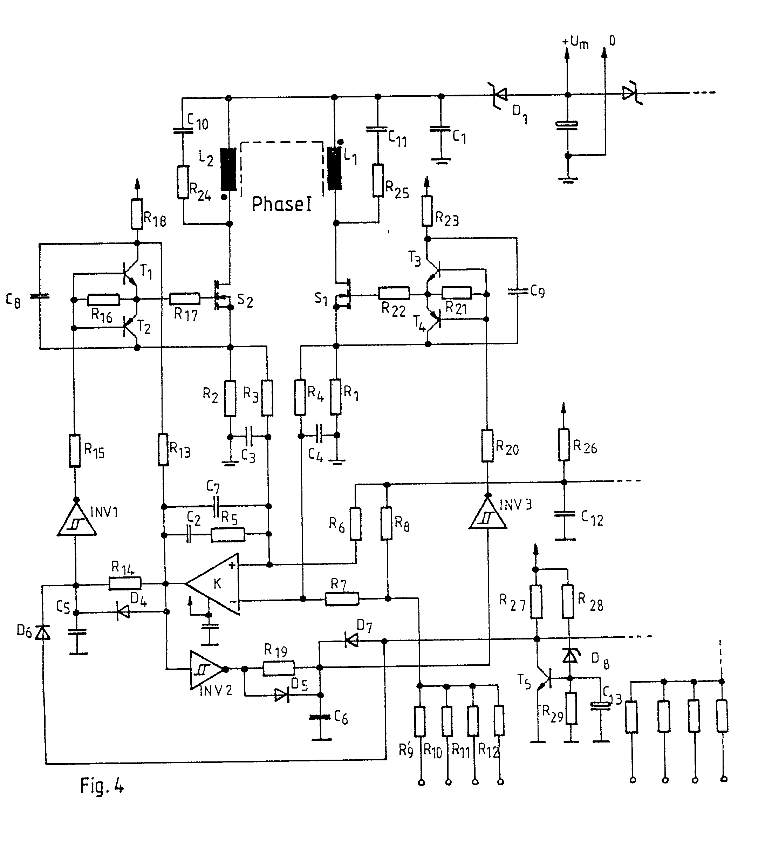

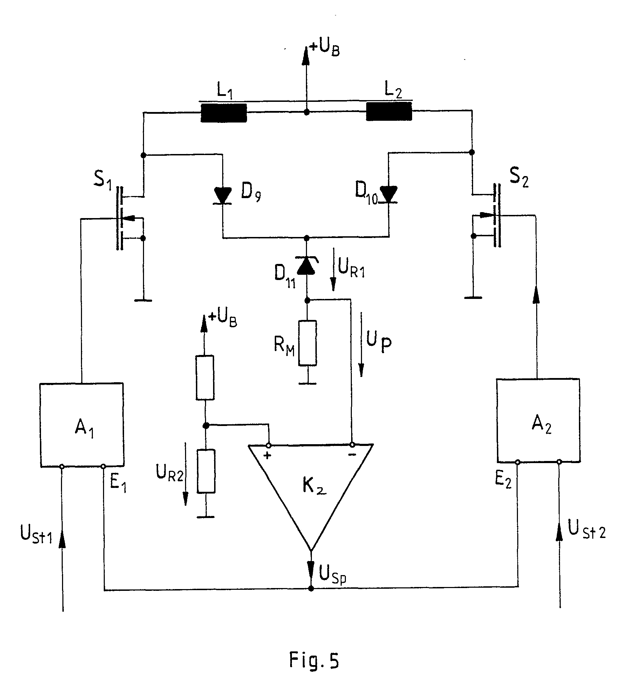

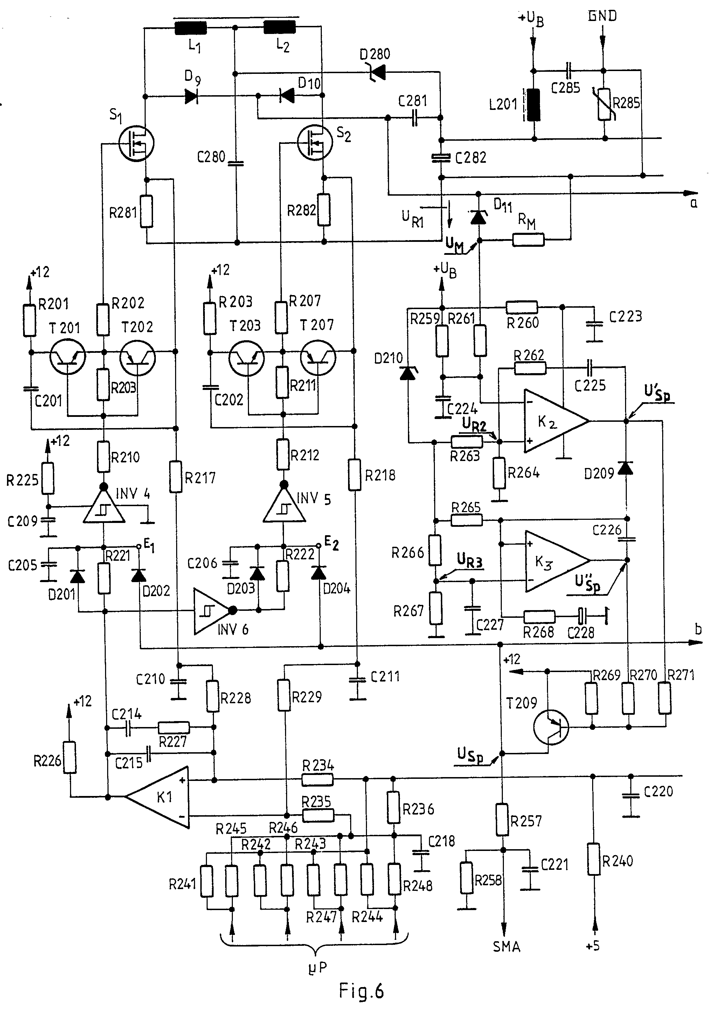

Die Erfindung samt ihren weiteren Vorteilen und Merkmalen ist im folgenden an Hand beispielsweiser Schaltungsanordnungen näher erläutert, die in der Zeichnung veranschaulicht sind. In dieser zeigen Fig. 1 das Prinzip der im Zusammenhang mit der Erfindung verwendeten, an sich bekannten Ansteuerschaltung, Fig. 2 eine Schaltungsanordnung nach der Erfindung mit Ausnützung der in den Halbwicklungen gespeicherten Energie, Fig. 3 in einem Diagramm die prinzipielle Wirkungsweise der erfindungsgemäßen Schaltungsanordnung, Fig. 4 eine praktisch ausgeführte Schaltung nach der Erfindung zur Ansteuerung zweier Phasen eines Unipolar-Schrittmotors, Fig. 5 eine Ausführungsform einer Schutzschaltung für die Endstufen und Fig. 6 eine im Detail ausgeführte Schaltung nach Fig. 5 im Zusammenhang mit einer Ansteuerschaltung für Schrittmotoren.

Gemäß der an sich bekannten Schaltung der Fig. 1 sind die beiden Halbwicklungen $L_1$, $L_2$ einer Phase eines Unipolar-Schrittmotors mit dem ihnen gemeinsamen Mittelpunkt der Gesamtwicklung an einen Pol der Motorbetriebsspannung angelegt. Die beiden Halbwicklungen $L_1$, $L_2$ sind bei den üblichen Motorbauarten magnetisch stark gekoppelt. Jede der Wicklungshälften liegt über einen gesteuerten Schalter $S_1$ bzw. $S_2$ und über einen Widerstand $R_1$ bzw. $R_2$ an Masse bzw. am zweiten Pol der Betriebsspannung.

Die Widerstände $R_1$, $R_2$ dienen als Stromfühler; der an ihnen auftretende Spannungsabfall ist dem Strom $I_1$ bzw. $I_2$ durch die Halbspulen $L_1$, $L_2$ proportional. Die an den beiden, nicht an Masse liegenden Punkten der Widerstände $R_1$, $R_2$ auftretende Differenzspannung $\Delta u$ ergibt sich mit $R_1 = R_2 = R$ zu

$$\Delta u = R(I_1 - I_2) = R \cdot I_M$$

worin $I_M$ den Magnetisierungsstrom durch die Feldspule des Motors bedeutet.

Die Differenzspannung $\Delta u$ wird über zwei Entkopplungswiderstände $R_3$, $R_4$ den beiden Eingängen eines Komparators K zugeführt, der in seinem Gegenkopplungszweig einen Widerstand $R_5$ aufweist. Das Ausgangssignal des Komparators K ist dem Steuereingang des einen gesteuerten Schalters $S_1$ direkt und dem entsprechenden Eingang des zweiten Schalters $S_2$ über ein Invertierglied INV zugeführt. Dem einen Eingang des Komparators K wird aus einer Stromquelle $Q_o$ ein Gleichstrom $I_o$ zur Festlegung des Arbeitspunktes zugeführt, dem anderen Eingang wird aus einer Stromquelle $Q_s$ ein Strom $I_s$ zugeführt, der das Bezugssignal darstellt, dem letztlich der Magnetisierungsstrom folgen soll. Das Bezugssignal besteht im allgemeinen aus einem Gleichstromanteil sowie aus einem diesem überlagerten, vorzugsweise sinusförmigen Wechselstromsignal.

Eine Schaltungsanordnung nach der Erfindung, bei der ein Ausnutzen der in den Halbspulen nach ihrem Abschalten von der Versorgungsspannung gespeicherten Energie ermöglicht ist, zeigt Fig. 2, wobei gleiche Schaltelemente wie in Fig. 1 bezeichnet sind. Die positive Versorgungsspannung $+U_M$ wird über eine Diode $D_1$ zugeführt, wobei − der Diode $D_1$ nachgeschaltet − ein Kondensator $C_1$ parallel zur Parallelschaltung der Serienzweige $L_1$, $S_1$, $R_1$ und $L_2$, $S_2$, $R_2$ liegt. Weiters sind hier Freilaufdioden $D_2$, $D_3$ parallel zu den Schaltern $S_1$, $S_2$ eingezeichnet. Derartige Dioden sind beispielsweise in Leistungstransistoren vom MOSFET Typ bereits enthalten und fallen dann nicht als zusätzliche Schaltelemente an. Das Invertierglied in der Ansteuerung eines gesteuerten Schalters könnte natürlich bei Verwendung komplementärer Halbleiterschalter entfallen. Von den Eingängen des Komparators K gegen Masse liegt je ein Kondensator $C_3$, $C_4$. Die RC-Glieder $R_3C_3$ bzw. $R_4C_4$ dienen zur Unterdrückung von Störspannungen, die durch die Schaltvorgänge entstehen. Im Gegenkopplungszweig des Komparators K liegt ein RC-Serienglied $R_5$, $C_2$, durch welches die dynamische Schalthysterese bestimmt ist.

Zur gleichspannungsmäßigen Festlegung des Potentials an den Eingängen sind diese über Widerstände $R_6$ sowie $R_7 + R_8$ an eine Spannung U gelegt. Die Spannungsteiler $R_6$, $R_3 + R_2$ bzw. $R_8 + R_7$, $R_1 + R_4$ bestimmen den Arbeitspunkt. Ein Wechselspannungsbezugssignal $U_s$ wird über einen Widerstand $R_9$ und den Widerstand $R_7$ dem invertierenden Eingang des Komparators zugeführt, wobei es im Prinzip völlig belanglos ist, welchem der beiden Eingänge das Bezugssignal zugeführt wird. Auch ist die Einkopplung anders möglich als über ein Widerstandsnetzwerk, beispielsweise kapazitiv oder mittels Übertrager.

Aus dem Diagramm nach Fig. 3 geht die Funktionsweise der erfindungsgemäßen Schaltung hervor. Gezeigt ist der Verlauf der Ströme $I_1$ und $I_2$ durch die Serienzweige $L_1$, $S_1$, $R_1$ und $L_2$, $S_2$, $R_2$, der Verlauf des tatsächlichen Magnetisierungsstromes $I_m$ der Feldwicklung, wobei strichliert das Bezugssignal $U_s$ eingezeichnet ist, sowie der Verlauf der Spannung $U_c$ am Kondensator $C_1$. Wie ersichtlich, schaltet der Komparator K um den Arbeitspunkt, der sich entsprechend dem Bezugssignal $U_s$ zeitlich, im vorliegenden Fall sinusförmig, ändert. Dementsprechend ist auch der Strom durch die Spulen $L_1$, $L_2$ getaktet, der tatsächliche Magnetisierungsstrom $I_m$ verläuft um die durch $U_s$ vorgegebene Kurvenform. Die Schaltfrequenz ist nicht nur durch das Verhältnis $U_m/L$ sondern auch durch das RC-Glied $R_5$, $C_2$ bestimmt, welches die dynamische Schalthysterese des Komparators festlegt.

Wie bereits erwähnt, ermöglicht die Verwendung der Diode $D_1$ zusammen mit dem Kondensator $C_1$ eine Ausnutzung der nach dem Abschalten in den Wicklungen $L_1$, $L_2$ gespeicherten Energie. Die Kondensatorspitzenspannung $\hat{U}_c$ bestimmt sich näherungsweise zu

$$\hat{U}_c = \sqrt{(U_m - U_D)^2 + I^2 \left(\frac{L}{C_1} - \frac{R_s}{2C_1} \cdot t_{um}\right)}$$

worin bedeuten

$U_d$    Durchflußspannung der Dioden $D_1$, $D_2$
$R_s$    ohmscher Widerstand der Feldwicklungen
$L$    Induktivität der Feldwicklung
$t_{um} = \pi \sqrt{LC}$        Umschwingzeit

Bei negativem Stromfluß in einer Halbwicklung wird der Kondensator C aus dieser aufgeladen und die Diode $D_1$ trennt die Versorgung von $U_m$ ab.

Es kommt, wie aus Fig. 3 hervorgeht, zu einer Spannungsüberhöhung, die im darauffolgenden Schalttakt zu einem rascheren Stromanstieg in der durchgeschalteten Halbwicklung führt. Voraussetzung für diese Arbeitsweise ist eine gute magnetische Kopplung der beiden Halbwicklungen.

Das Schaltbild nach Fig. 4 zeigt eine praktische Ausführung einer Schrittmotorendstufe unter Verwendung der Erfindung. Die Schaltung ist zur sinusförmigen, um 90° verschobenen Ansteuerung der beiden, je aus zwei Halbwicklungen bestehenden Phasen eines 2-Phasen-Unipolar-Schrittmotors gedacht. Der größte Teil der Schaltung zur Ansteuerung der zweiten Phase ist jedoch aus Gründen der Vereinfachung nicht gezeigt, da die Schaltung hinsichtlich der beiden Phasen völlig symmetrisch aufgebaut ist. Im folgenden ist die Schaltung kurz erläutert.

Der Kern der Schaltung entspricht der Schaltung nach Fig. 2 und ist auch mit gleichen Bezugszeichen versehen. Als Schalter dienen zwei MOSFET-Transistoren $S_1$, $S_2$, welche die beiden Freilaufdioden $D_2$ und $D_3$ aus Fig. 2 bereits enthalten. Die Ansteuerung der MOSFET-Transistoren $S_2$, $S_1$ erfolgt jeweils über Inverter INV1 bzw. INV3, die zur Impulsformung dienen und deren Ausgangssignal über einen Widerstand $R_{15}$ bzw. $R_{20}$ einer komplementären Treiberstufe, bestehend aus den Transistoren $T_1$, $T_2$ bzw. $T_3$, $T_4$ und den Widerständen $R_{16}$, $R_{18}$ bzw. $R_{21}$, $R_{23}$ zugeführt wird. Dem Inverter INV2 kommt die Funktion des Inverters INV aus Fig. 1 und 2 zu. Über Widerstände $R_{17}$ bzw. $R_{22}$ wird das Signal an das Gate der Transistoren $S_1$, $S_2$ geführt. Die Einstellung der Schaltströme bzw. deren Begrenzung erfolgt durch entsprechende Wahl der Widerstände $R_{15}$ und $R_{17}$ bzw. $R_{20}$ und $R_{22}$. Damit die Umladeströme der Gate-Kapazitäten nicht über $R_1$ bzw. $R_2$ fließen, liegt das Bezugspotential der Treiberstufen direkt am Source-Anschluß der MOSFET-Transistoren $S_2$, $S_1$, wo auch je ein Abblockkondensator $C_8$ bzw. $C_9$ angreift.

Um ein überlappendes Schalten der Transistoren $S_2$, $S_1$ zu vermeiden, wird das Einschalten mittels RC-Glieder $R_{14}$, $C_5$ bzw. $R_{19}$, $C_6$ verzögert, sodaß eine ausreichend große Totzeit entsteht. Die Dioden $D_4$ bzw. $D_5$ führen dabei zu unterschiedlichen Zeitkonstanten beim Aufladen bzw. Entladen der Kondensatoren $C_5$ bzw. $C_6$.

Die Vorgabe des Bezugssignals erfolgt mittels eines nicht dargestellten Mikroprozessors, der über binär gewichtete Widerstände $R_9$, $R_{10}$, $R_{11}$, $R_{12}$ den Arbeitspunkt am invertierenden Eingang des Komparators K einstellt. Dank der 16 möglichen Werte kann eine quasi-analoge Ansteuerung mit beliebigen Kurvenformen erzielt werden.

Der Kondensator $C_7$ geringer Kapazität im Rückkopplungszweig des Komparators K soll einen raschen Spannungsanstieg gewährleisten, seine Verwendung ist in Hinblick auf die unerwünschten Eingangskapazitäten des Komparators zweckmäßig. Der Widerstand $R_{26}$ dient zur Festlegung des Arbeitspunktes am nicht invertierenden Eingang des Komparators K, $C_{12}$ ist ein Siebkondensator.

Die Serienschaltung $R_{24} + C_{10}$ bzw. $R_{25} + C_{11}$ parallel zu den Halbwicklungen $L_2$ bzw. $L_1$ dient zur Vernichtung von Überschwingspitzen beim Abschaltvorgang.

In der Schaltung $T_5$, $D_8$, $C_{13}$, $R_{27}$, $R_{28}$, $R_{29}$ ist der Transistor $T_5$ gesperrt, solange die Betriebsspannung unterhalb eines bestimmten Wertes liegt. In diesem Fall wird über Dioden $D_6$, $D_7$ erreicht, daß die Schalter $S_1$, $S_2$ gesperrt bleiben, die Schaltung somit unterhalb einer Mindestbetriebsspannung nicht arbeitet.

Fig. 5 erläutert das Prinzip einer besonderen Schutzschaltung für die Endstufen. Die Halbwicklungen $L_1$, $L_2$ einer Phase des Schrittmotors liegen je über einen gesteuerten Schalter $S_1$, $S_2$, z.B. über je einen Feldeffekttransistor, an der Motor-Speisespannung $+U_b$. Die Ansteuerung der gesteuerten Schalter erfolgt über Ansteuerschaltungen $A_1$, $A_2$, die den weiter oben beschriebenen entsprechen. Den Ansteuerschaltungen können z.B. mittels eines nicht gezeigten Mikroprozessors dargestellte Bezugssignale $U_{st1}$, $U_{st2}$ zugeführt werden.

Die mit den Endstufenschaltern $S_1$, $S_2$ verbundenen Enden der Motorwicklungen $L_1$, $L_2$ sind je über eine Diode $D_9$, $D_{10}$ mit der gegen Masse (bzw. den anderen Pol der Motor-Speisespannung) geschalteten Serienschaltung einer Zenerdiode $D_{11}$ ($U_{R1}$) und eines Meßwiderstandes $R_M$ verbunden. Das an dem Meßwiderstand $R_M$ gegen Masse anfallende Meßsignal $U_P$ ist einem Eingang, bei der gewählten Spannungspolarität dem invertierenden Eingang, eines weiteren, zweiten Komparators $K_2$ zugeführt. An dem anderen, nicht invertierenden Eingang des Komparators $K_2$ liegt eine Bezugsspannung $U_{R2}$, die z.B. in einfacher Weise mittels eines Spannungsteilers von der Betriebsspannung $U_B$ abgeleitet sein kann. Das Ausgangssignal des zweiten Komparators $K_2$ ist als Sperrsignal $U_{sp}$ Sperreingängen $E_1$ bzw. $E_2$ der Ansteuerschaltungen $A_1$ bzw. $A_2$ zugeführt.

Die Schaltung nach Fig. 5 arbeitet in folgender Weise. Im normalen Betrieb treten an den Wicklungen $L_1$, $L_2$ Spannungen auf, die keine Gefährdung für die Schalter $S_1$, $S_2$ darstellen. Die Zenerdiode $D_{11}$ ist so dimensioniert, daß sie bei Vorliegen solcher Spannungen gesperrt bleibt.

Anomale Betriebszustände, wie z.B. Unterbrechungen in den Wicklungen $L_1$ oder $L_2$, können jedoch zu Überspannungen führen, die eine Zerstörung der Endstufenschalter $S_1$, $S_2$ zur Folge hätten. Treten derartige Überspannungen an einem der Schalter $S_1$, $S_2$ auf, so wird die Zenerdiode $D_{11}$ über eine der Dioden $D_9$, $D_{11}$ leitend und an dem Meßwiderstand RM entsteht ein Spannungsabfall, hier als Meßsignal $U_P$ bezeichnet, wodurch die Spannung am invertierenden Eingang des zweiten Komparators $K_2$ steigt. Sobald an diesem Eingang die Bezugsspannung $U_{R2}$ am nicht invertierenden Eingang überschritten wird, ändert sich die Ausgangsspannung des zweiten Komparators sprunghaft. Die Ausgangsspannung wird als Sperrsignal $U_{sp}$ den Sperreingängen $E_1$, $E_2$ der

Ansteuerschaltungen $A_1$, $A_2$ zugeführt, wodurch beide Schalter $S_1$, $S_2$ gesperrt werden.

Zu der beschriebenen Prinzipschaltung ist anzumerken, daß sie aus Gründen der Übersichtlichkeit auf die im Zusammenhang mit der Erfindung wesentlichen Schaltelemente beschränkt ist und auch nur die Hälfte der Ansteuerschaltung eines zweiphasigen Unipolar-Schrittmotors darstellt. Um die Sperre der Schalter $S_1$, $S_2$ genügend lange aufrecht zu erhalten, kann der Signalweg der Sperrspannung in bekannter Weise mit zeitbestimmenden RC-Gliedern versehen sein oder über ein durch ein äußeres Rückstellsignal ansteuerbares Flip-Flop od.dgl. geführt sein.

Nähere Details einer praktisch ausgeführten Schaltung, die auch in besonderer Weise für eine genügend lang dauernde Aufrechterhaltung des Sperrzustandes ausgelegt ist, sind in Fig. 6 dargelegt.

Die in Fig. 6 dargestellte Schaltung entspricht – abgesehen von der Schutzschaltung – im wesentlichen der in Fig. 4 beschriebenen Schaltung, die zur sinusförmigen, um 90° verschobenen Ansteuerung der beiden, je aus zwei Halbwicklungen bestehenden Phasen eines 2-Phasen-Unipolar-Schrittmotors gedacht ist. Der Schaltungsteil zur Ansteuerung der zweiten Phase ist auch hier aus Gründen der Vereinfachung nicht gezeigt, da die Schaltung hinsichtlich der beiden Phasen völlig symmetrisch aufgebaut ist.

Als gesteuerte Schalter dienen zwei MOSFET-Transistoren $S_1$, $S_2$. Die beiden Halbwicklungen $L_1$, $L_2$ einer Motorphase liegen mit ihren einen Wicklungsenden über eine Diode $D_{280}$ und eine Drossel $L_{201}$ an der Betriebsspannung $+U_B$; die anderen Wicklungsenden sind über die Transistorschalter $S_1$, $S_2$ und je einen Stromfühler-Widerstand $R_{281}$, $R_{282}$ an Masse GND gelegt. Ein der Diode $D_{280}$ nachgeschalteter Kondensator $C_{280}$ erhöht den Wirkungsgrad der Schaltung, er entspricht dem Kondensator $C_1$ nach Fig. 2 und 4.

Das an den Widerständen $R_{281}$, $R_{282}$ auftretende Differenzsignal wird über RC-Glieder $R_{217}$, $C_{210}$ bzw. $R_{218}$, $C_{211}$ und Entkopplungswiderstände $R_{228}$, $R_{229}$ den Eingängen eines Komparators $K_1$ zugeführt, dessen Ausgangssignal über einen Inverter $INV_4$ und eine komplementäre Treiberstufe $T_{201}$, $T_{202}$ dem Transistorschalter $S_1$ bzw. über einen Inverter $INV_6$, einen Inverter $INV_5$ und eine komplementäre Treiberstufe $T_{203}$, $T_{204}$ dem Transistorschalter $S_2$ zugeführt wird. Der Komparator $K_1$ entspricht dem (ersten) Komparator K der Fig. 1, 2 und 4, 5.

Wie bereits erwähnt, erfolgt die Vorgabe des Bezugssignals, dem letztlich der Magnetisierungsstrom in den Motorwicklungen folgen soll, mittels eines nicht dargestellten Mikroprozessors, der über binär gewichtete Widerstände $R_{245}$ bis $R_{248}$ den Arbeitspunkt an den Eingängen des Komparators $K_1$ einstellt.

Die Widerstände $R_{241}$ bis $R_{245}$ sind sogenannte «Pull-Up» Widerstände, die den Ausgang des Mikroprozessors entlasten. Der mit SMA bezeichnete Ausgang signalisiert dem Mikroprozessor den Status der Endstufe (ein- oder ausgeschaltet).

Im folgenden wird der erfindungsgemäße Teil der Schaltung nach Fig. 6 näher erläutert. Das Potential an den mit den Schaltern $S_1$, $S_2$ verbundenen Enden der Wicklungen $L_1$, $L_2$ wird über die Trenndioden $D_9$, $D_{10}$ der gegen Masse geschalteten Serienschaltung der Zenerdiode $D_{11}$ ($U_{R1}$) und des Meßwiderstandes $R_M$ zugeführt. Die mit a bezeichnete Leitung führt in nicht gezeigter Weise gleichfalls über Dioden zu den Wicklungsenden der zweiten Motorphase (nicht dargestellt). Bei einer Motor-Speisespannung von $U_B = 12$ V wird beispielsweise eine Diode $D_{11}$ mit einer Zenerspannung von 64 V und ein Widerstandswert für $R_M$ von 500 mOhm gewählt.

Das an $R_M$ anfallende Meßsignal $U_P$ wird über einen Widerstand $R_{261}$ dem invertierenden Eingang eines zweiten Komparators $K_2$ zugeführt. Dieser Eingang liegt überdies über einen Widerstand $R_{259}$ an der Betriebsspannung $+U_B$ und über einen Kondensator $C_{224}$ an Masse. Über einen Widerstand $R_{260}$ erhält der Komparator $K_2$ seine Speisespannung, wobei ein Siebkondensator $C_{223}$ vorgesehen ist. Der nicht invertierende Eingang des zweiten Komparators liegt über den Spannungsteiler $R_{263}$, $R_{264}$ an der über die Zenerdiode $D_{210}$ verminderten Betriebsspannung $+U_B$. Hiedurch ist an dem nicht invertierenden Eingang des Komparators $K_2$ eine Bezugsspannung $U_{R2}$ vorgegeben. Als beispielsweise Dimensionierung sei angegeben: $R_{259} = 33$ kOhm, $R_{261} = 1$ kOhm, $R_{263} = 12$ kOhm, $R_{264} = 1$ kOhm, $U_z$ ($D_{210}$) = 5,6 V, $C_{224} = 4,7$ nF, $R_{260} = 15$ Ohm, $C_{223} = 100$ nF. Im Gegenkopplungszweig des Komparators $K_3$ liegt ein Serien-RC-Glied $R_{262}$, $C_{225}$ (22kOhm, 470 nF).

Es ist weiters ein dritter Komparator $K_3$ vorgesehen, von dessen invertierenden Eingang ein Widerstand $R_{267}$ eines gleichfalls über die Zenerdiode $D_{210}$ an der Betriebsspannung liegenden Spannungsteilers $R_{266}$, $R_{267}$ gegen Masse gelegt ist. Parallel zum Widerstand $R_{267}$ liegt ein Kondensator $C_{227}$. Hiedurch ist an diesem Eingang eine Bezugsspannung $U_{R3}$ gebildet. Der nicht invertierende Eingang des Komparators $K_3$ liegt einerseits über einen Widerstand $R_{265}$ und die Zenerdiode $D_{210}$ an der Betriebsspannung $+U_B$ und andererseits über die Serienschaltung eines Widerstandes $R_{268}$ und eines Kondensators $C_{228}$ an Masse. Über eine Diode $D_{209}$ ist der nicht invertierende Eingang des Komparators $K_4$ mit dem Ausgang des Komparators $K_2$ verbunden. Im Gegenkopplungszweig des Komparators $K_3$ liegt ein Kondensator $C_{226}$. Zur beispielsweisen Dimensionierung sei angegeben: $R_{266} = 1,2$ kOhm, $R_{267} = 12$ kOhm, $C_{227} = 47$ nF, $R_{265} = 56$ kOhm, $R_{268} = 680$ Ohm, $C_{228} = 4,7$ μF, $C_{226} = 47$ pF.

Die Ausgangssignale $U'_{sp}$ des Komparators $K_2$ bzw. $U''_{sp}$ des Komparators $K_3$ werden über Widerstände $R_{270}$ bzw. $R_{271}$ der Basis eines p-n-p Transistors $T_{209}$ zugeführt. Im Kollektorkreis dieses Transistors liegen in Serie zwei Widerstände $R_{257}$ und $R_{258}$, wobei der letztgenannte Widerstand von einem Kondensator $C_{221}$ überbrückt ist. Zwischen Basis und Emitter liegt ein Widerstand $R_{269}$. Der Kollektor ist über Dioden $D_{202}$ bzw. $D_{204}$ an die

Eingänge der Inverter $INV_4$ bzw. $INV_5$ gelegt. Die mit b bezeichnete Leitung führt in analoger Weise zu Invertereingängen der nicht gezeigten Ansteuerschaltung der zweiten Motorphase. Der Transistor $T_{209}$ dient als Schaltstufe mit einer ODER-Verknüpfung der beiden Signale $U'_{sp}$ und $U''_{sp}$ am Eingang. Am Ausgang tritt das Signal $U_{sp}$ auf. Eine beispielsweise Dimensionierung der hier verwendeten Schaltelemente lautet: $R_{269} = R_{270} = R_{271} = 33$ kOhm, $R_{257} = 6,2$ kOhm, $R_{258} = 3,6$ kOhm, $C_{221} = 220$ pF.

Die beschriebene Schutzschaltung arbeitet folgendermaßen: Bei Auftreten einer Überspannung an einer der Wicklungen $L_1$, $L_2$ bzw. der nicht dargestellten Wicklungen der zweiten Motorphase wird die Zenerdiode $D_{11}$ über eine der Trenndioden $D_9$, $D_{10}$ leitend und an dem Meßwiderstand $R_M$ tritt eine positive Meßspannung $U_p$ auf, wodurch das Potential am invertierenden Eingang des zweiten Komparators $K_2$, an dessen nicht invertierenden Eingang eine Spannung von etwa $+0,5$ V liegt, ansteigt und der bis dahin auf positivem Potential gelegene Ausgang des Komparators gegen Null absinkt, was dem Auftreten des Sperrsignales $U'_{sp}$ entspricht. Der Transistorschalter $T_{209}$ wird leitend, wodurch die Eingänge aller Inverter $INV_4$, $INV_5$ (und der beiden nicht dargestellten Inverter der zweiten Schaltungshälfte) annähernd auf das Potential der Betriebsspannung $+U_B$ gehoben werden, wodurch alle Leistungsschalter $S_1$, $S_2$ etc. der Endstufen abschalten. Nach Fortfall der Überspannung nimmt der Ausgang des zweiten Komparators $K_2$ in einem durch die Zeitkonstante des RC-Gliedes $R_{262}$, $C_{225}$ (etwa 25 ms) und die Schaltschwellen des Komparators (Umschwingzeit etwa 10 ms) bestimmten Verlauf wieder positives Potential an.

Da Überspannungen üblicherweise nur kurzzeitig auftreten, würden nach Wegfall einer Spannungsspitze entsprechend der Zeitkonstanten $R_{262} \cdot C_{225}$ rasch sämtliche Schaltstufen wieder betriebsbereit sein, was aus Sicherheitsgründen jedoch unerwünscht ist. Aus diesem Grund ist der dritte Komparator $K_3$ vorgesehen, der zusammen mit seiner Beschaltung für eine weitere Verzögerung des Sperrsignales sorgt.

Sobald der Ausgang des zweiten Komparators $K_2$ gegen Null geht, wird auch der nicht invertierende Eingang des dritten Komparators $K_3$ gegen das Nullpotential gezogen, sodaß auch der Ausgang des Komparators $K_3$ das Nullpotential annimmt. Gleichzeitig wird der zuvor aufgeladen gewesene Kondensator $C_{228}$ über $R_{268}$ und die Diode $D_{209}$ entladen.

Wenn nach Wegfall einer Überspannung der zweite Komparator $K_2$ wieder seinen Ausgangszustand einnimmt, wird der Kondensator $C_{228}$ über die Widerstände $R_{268} + R_{265}$ wieder aufgeladen. Da der Wert des Widerstandes $R_{265}$ wesentlich größer ist als jener des Widerstandes $R_{268}$, erfolgt das Aufladen entsprechend langsamer als das Entladen, bis die Schaltschwelle des dritten Komparators $K_3$ wieder erreicht ist. Die Zeitkonstante von $K_3$ beträgt etwa 260 ms, die zugehörige Aufladezeit etwa 600 ms. Für die Entladung wirksam ist eine Entladezeitkonstante von etwa 3 ms (ca 1/3 der Umschwingzeit von $K_2$). Nun steigt das Potential am Ausgang des dritten Komparators $K_3$ wieder gegen $+U_B$ und der Transistor $T_{209}$ sperrt. Die Endstufen können wieder arbeiten, solange nicht erneut eine Überspannung auftritt.

Die Schaltung weist als weitere Besonderheit auch einen Schutz gegen einen unzulässigen Abfall der Betriebsspannung auf, was im folgenden erläutert wird.

Am invertierenden Eingang des zweiten Komparators $K_2$ liegt, definiert durch $R_{259} + R_{261}$ ($R_{280}$ ist klein gegen $R_{259}$ und $R_{261}$), ein Bruchteil der Betriebsspannung $+U_B$. Die Zenerdiode $D_{210}$ versorgt den Spannungsteiler $R_{263}$, $R_{264}$, welcher die Spannung am nicht invertierenden Eingang des Komparators $K_2$ festlegt. Bei der beispielsweisen Dimensionierung liegt am invertierenden Eingang bei normaler Betriebsspannung $+U_B = 12$ V eine Spannung von $12/(33 + 1) = 0,35$ V und am nicht invertierenden Eingang eine Spannung von $(U_B - U_Z)/(1 + 12) = (12 - 5,6)/13 = 0,5$ V.

Daraus ergibt sich, daß bei einem Abfall von $U_B$ auf z.B. 6 V die Spannung am invertierenden Eingang auf etwa 0,18 V und jene am nicht invertierenden Eingang auf etwa 30 mV absinkt, was jedoch eine Umkehr der Polarität an den beiden Eingängen des zweiten Komparators $K_2$ – bezogen auf normale Betriebsspannung – bedeutet. Das Potential am Ausgang des Komparators $K_2$ sinkt gegen Null und über den Schalttransistor $T_{209}$ werden die Endstufen abgeschaltet. Der dritte Komparator $K_3$ erfüllt hier die gleiche Funktion, wie im Zusammenhang mit dem Abschalten bei Überspannung beschrieben. Auf diese Weise wird bei zu starkem Absinken der Betriebsspannung ein undefiniertes Schalten des Schrittmotors vermieden.

**Patentansprüche**

1. Schaltungsanordnung zur Ansteuerung eines Unipolar-Schrittmotors mit zwei Halbwicklungen ($L_1$, $L_2$) je Phase, bei welchem jede Halbwicklung jeder Phase in Serie mit einem gesteuerten Schalter ($S_1$, $S_2$), dem eine Freilaufdiode ($D_2$, $D_3$) parallelgeschaltet ist, an der Motor-Speisespannung ($U_m$) liegt, wobei jede Serienschaltung Halbwicklung – Schalter einen Stromfühler, insbesondere einen Serienwiderstand ($R_1$, $R_2$; $R_{281}$, $R_{282}$) für den Motorstrom aufweist, die Ausgänge der Stromfühler je mit einem der beiden Eingänge eines Komparators ($K$; $K_1$) verbunden sind, wobei einem der Eingänge ein Bezugssignal ($I_s$) zugeführt ist und der Ausgang des Komparators ($K$; $K_1$) mit den Steuereingängen der bezüglich eines Steuersignales gegenphasig schaltenden gesteuerten Schalter ($S_1$, $S_2$) verbunden ist, dadurch gekennzeichnet, daß parallel zu der Parallelschaltung der beiden Serienschaltungen erste Halbwicklung ($L_1$) – erster gesteuerter Schalter ($S_1$) bzw. zweite Halbwicklung ($L_2$) – zweiter gesteuerter Schalter ($S_2$) ein Kondensator ($C_1$, $C_{280}$) liegt und dieser

über eine Diode ($D_1$, $D_{280}$) an die Speisespannung ($U_m$) des Motors gelegt ist.

2. Schaltungsanordnung nach Anspruch 1, dadurch gekennzeichnet, daß zur Festlegung der Schalthysterese im Rückkopplungszweig des Komparators ein RC-Glied ($R_5$, $C_2$) vorgesehen ist.

3. Schaltungsanordnung nach Anspruch 1 oder 2, dadurch gekennzeichnet, daß die an den gesteuerten Schaltern ($S_1$, $S_2$) liegenden Enden der Motorwicklungen ($L_1$, $L_2$) über Dioden ($D_9$, $D_{10}$) an eine gegen Masse geschaltete Serienschaltung einer Referenzspannungsquelle ($U_{R1}$), vorzugsweise einer Zenerdiode ($D_{11}$), und eines Meßwiderstandes ($R_M$) gelegt sind, wobei das Meßsignal ($U_p$) des Meßwiderstandes ($R_M$) einem Eingang eines weiteren, zweiten Komparators ($K_3$) zugeführt ist, an dessen anderen Eingang eine Bezugsspannung ($U_{R2}$) gelegt ist, und daß das Ausgangssignal des zweiten Komparators ($K_3$) als Sperrsignal ($U_{sp}$, $U'_{sp}$) Sperreingängen ($E_1$, $E_2$) der Ansteuerschaltungen ($A_1$, $A_2$; bzw. $T_{201}$, $T_{202}$, $INV_4$,...; $T_{203}$, $T_{204}$, $INV_5$,...) der Endstufenschalter ($S_1$, $S_2$) zugeführt ist. (Fig. 5 und 6).

4. Schaltungsanordnung nach Anspruch 3, dadurch gekennzeichnet, daß ein dritter Komparator ($K_4$) vorgesehen ist, dessen einem (nicht invertierendem) Eingang die Ausgangsspannung ($U_{sp}$) des zweiten Komparators ($K_3$) zugeführt ist, wobei dieser Eingang über die Serienschaltung eines Widerstandes ($R_{268}$) und eines Kondensators ($C_{228}$) an Masse liegt, sowie über einen Widerstand ($R_{265}$) an die Betriebsspannung ($+U_b$) gelegt ist, wogegen an dem anderen (invertierenden) Eingang des dritten Komparators ($K_4$) eine Bezugsspannung ($U_{R3}$) gelegt ist und daß die Ausgangsspannung ($U'_{sp}$) des zweiten Komparators ($K_3$) und die Ausgangsspannung ($U''_{sp}$) des dritten Komparators ($K_4$) einer ODER-Schaltung ($R_{270}$, $R_{271}$, $T_{209}$) zugeführt sind, deren Ausgangssignal ($U_{sp}$) den Ansteuerschaltungen ($T_{201}$, $T_{202}$, $INV_4$, ....; $T_{203}$, $T_{204}$, $INV_5$, ....; bzw. $A_1$, $A_2$) als Sperrsignal ($U_{sp}$) zugeführt ist.

5. Schaltungsanordnung nach Anspruch 3 oder 4, dadurch gekennzeichnet, daß der zweite Komparator ($K_3$) in seinem Gegenkopplungszweig ein Serien-RC-Glied ($R_{262}$, $C_{225}$) aufweist.

6. Schaltungsanordnung nach Anspruch 4 oder 5, dadurch gekennzeichnet, daß die Zeitkonstante des mit der Betriebsspannung verbundenen, an dem nicht invertierenden Eingang des dritten Komparators ($K_4$) liegenden Widerstandes ($R_{265}$) und des Kondensators ($C_{228}$) groß ist gegen die Zeitkonstante des ersten Komparators ($K_3$).

7. Schaltungsanordnung nach einem der Ansprüche 4 bis 6, dadurch gekennzeichnet, daß der Wert des Widerstandes ($R_{268}$) der Serienschaltung ($R_{268}$, $C_{228}$) am nicht invertierenden Eingang des dritten Komparators ($K_4$) klein ist gegen den Wert des zur Betriebsspannung führenden Widerstandes ($R_{265}$) an diesem Eingang.

8. Schaltungsanordnung nach einem der Ansprüche 4 bis 9, dadurch gekennzeichnet, daß die Bezugsspannung ($U_{R2}$) des zweiten Komparators ($K_3$) von einem Spannungsteiler ($R_{263}$, $R_{264}$) gebildet ist, der an Masse und über eine Zenerdiode

($D_{210}$) an der Betriebsspannung ($+U_B$) liegt, wobei diese Zenerdiode ($D_{210}$) überdies mit einem die Bezugsspannung ($U_{R3}$) des dritten Komparators ($K_4$) bildenden Spannungsteiler ($R_{266}$, $R_{267}$) und mit dem zum nicht invertierenden Eingang dieses Komparators führenden Widerstand ($R_{265}$) verbunden ist.

## Claims

1. A circuit arrangement for controlling a unipolar stepping motor with two half-windings ($L_1$, $L_2$) per phase, in which each half-winding of each phase is in series with a controlled switch ($S_1$, $S_2$), to which a freewheeldiode ($D_2$, $D_3$) is connected in parallel, is connected to the motor-supply voltage ($U_m$), and wherein each series-connection formed by half-winding-switch has a current sensor, more especially a series-resistor ($R_1$, $R_2$; $R_{281}$, $R_{282}$) for the motor current associated therewith, the outputs of the current sensors being each connected with one of the two inputs of a comparator ($K$; $K_1$), and wherein a reference signal ($I_s$) is fed to one of the two inputs and the output of the comparator ($K$; $K_1$) is connected with the control inputs of a controlled switch ($S_1$, $S_2$) which operates in phase opposition with respect to a control signal, characterised in that parallel to the parallel-connection of the two series-connections formed respectively by the first half-winding ($L_1$) – first controlled switch ($S_1$) and second half-winding ($L_2$) – second controlled switch ($S_2$) there is disposed a capacitor ($C_1$, $C_{280}$) and the latter is connected by way of a diode ($D_1$, $D_{280}$) to the motor supply voltage ($U_m$).

2. A circuit arrangement according to Claim 1, characterised in that for determining the switch hysteresis in the feedback loop of the comparator an RC-circuit ($R_5$, $C_2$) is provided.

3. A circuit arrangement according to Claim 1 or 2, characterised in that the ends of the motor windings ($L_1$, $L_2$) connected to the controlled switches ($S_1$, $S_2$) are connected by way of diodes ($D_9$, $D_{10}$) to an earthed series-connection formed of a reference-voltage source ($U_{R1}$), preferably a Zener diode ($D_{11}$), and a measuring resistor ($R_M$), wherein the measuring signal ($U_p$) of the measuring resistor ($R_M$) is fed to the input of a further, second comparator ($K_3$), to the other input of which a reference voltage ($U_{R2}$) is applied, and that the output signal of the second comparator ($K_3$) is fed as blocking signal ($U_{sp}$, $U'_{sp}$) to the blocking inputs ($E_1$, $E_2$) of the trigger circuits ($A_1$, $A_2$, respectively $T_{201}$, $T_{202}$, $INV_4$;...$T_{203}$, $F_{204}$, $INV_5$,...) of the power stage switches ($S_1$, $S_2$) (Figs. 5 and 6).

4. A circuit arrangement according to Claim 3, characterised in that a third comparator ($K_4$) is provided, to one (non-inverting) input of which the output voltage ($U_{sp}$) of the second comparator ($K_3$) is fed, said input being put to earth by way of a series-connection formed of a resistor ($R_{268}$) and a capacitor ($C_{228}$) and being also connected by way of a resistor ($R_{265}$) to the operating voltage ($+U_b$), whereas to the other (inverting) input of the third comparator ($K_4$) a reference voltage ($U_{R3}$) is applied and that the output voltage ($U'_{sp}$) of the

second comparator ($K_3$) and the output voltage ($U''_{sp}$) of the third comparator ($K_4$) are fed to an OR-circuit ($R_{270}$, $R_{271}$, $T_{209}$) the output signal ($U_{sp}$) of which is fed as a blocking signal ($U_{sp}$) of which is fed as a blocking signal ($U_{sp}$) to the trigger circuits ($T_{201}$, $T_{202}$, $INV_4$; ....$T_{203}$, $T_{204}$, $INV_5$; or $A_1$, $A_2$).

5. A circuit arrangement according to Claim 3 or 4, characterised in that the second comparator ($K$) has in its feedback loop a series-RC-element ($R_{262}$, $C_{225}$).

6. A circuit arrangement according to Claim 4 or 5, characterised in that the time constant of the resistor ($R_{265}$) connected to the operating voltage and linked to the non-inverting input of the third comparator ($K_4$), and the time constant of the capacitor ($C_{228}$) is large with respect to the time constant of the first comparator ($K_3$).

7. A circuit arrangement according to any one of Claims 4 to 6, characterised in that the value of the resistor ($R_{268}$) of the series-connection ($R_{268}$, $C_{228}$) at the non-inverting input of the third comparator ($K_4$) is small with respect to the value of the resistor ($R_{265}$) at this input which leads to the operating voltage.

8. A circuit arrangement according to any one of Claims 4 to 9, characterised in that the reference voltage ($U_{R2}$) of the second comparator ($K_3$) is formed by a voltage divider ($R_{263}$, $R_{264}$) which is earthed and is connected to operating voltage ($+U_B$) by way of a Zener diode ($D_{210}$), said Zener diode ($D_{210}$) being in addition connected with a voltage divider ($R_{266}$, $R_{267}$) forming the reference voltage ($U_{R3}$) of the third comparator ($K_4$) and with a resistor ($R_{265}$) leading to the non-inverting input of this comparator.

## Revendications

1. Montage pour commander un moteur pas à pas unipolaire comportant deux demi-enroulements ($L_1$, $L_2$) par phase, où chaque demi-enroulement de chaque phase est relié, en série avec un interrupteur commandé ($S_1$, $S_2$) sur lequel est montée en parallèle une diode roue libre ($D_2$, $D_3$), à la tension d'alimentation-moteur ($U_m$), chaque montage série demi-enroulement-interrupteur comportant un détecteur de courant, en particulier une résistance série ($R_1$, $R_2$; $R_{281}$, $R_{282}$) pour le courant moteur, les sorties des détecteurs de courant étant reliées chacune à l'une des deux entrées d'un comparateur ($K$; $K_1$), l'une des entrées recevant un signal de référence ($I_s$) et la sortie du comparateur ($K$; $K_1$) étant reliée aux entrées de commande des interrupteurs ($S_1$, $S_2$) commandés de façon à commuter en opposition de phase vis-à-vis d'un signal de commande, caractérisé en ce qu'il est monté en parallèle sur le montage en parallèle des deux montages – série premier demi-enroulement ($L_1$) – premier interrupteur commandé ($S_1$), respectivement second demi-enroulement ($L_2$) – second interrupteur commandé ($S_2$), un condensateur ($C_1$, $C_{280}$), et en ce que celui-ci est branché, par l'intermédiaire d'une diode ($D_1$, $D_{280}$), sur la tension d'alimentation ($U_m$) du moteur.

2. Montage selon la revendication 1, caractérisé en ce qu'il est prévu un circuit RC (R₅, C₂) pour fixer l'hystérésis de commutation dans la branche de réaction.

3. Montage selon la revendication 1 ou 2, caractérisé en ce que les extrémités des enroulements moteur (L₁, L₂) situées sur les interrupteurs commandés (S₁, S₂) sont reliées par l'intermédiaire de diodes (D₉, D₁₀) à un montage série monté à la masse d'une source de tension de référence (U_{R1}), de préférence d'une diode Zener (D₁₁), et d'une résistance de mesure (R_M), le signal de mesure (U_p) de la résistance de mesure (R_M) étant transmis à une entrée d'un autre, second comparateur (R₃) à l'autre entrée duquel est appliquée une tension de référence (U_{R2}), et en ce que le signal de sortie du second comparateur (K₃) est transmis, en tant que signal d'inhibition (U_{sp}, U'_{sp}), à des entrées d'inhibition (E₁, E₂) des montages de commande (A₁, A₂; respectivement T₂₀₁, T₂₀₂, INV₄,...; T₂₀₃; T₂₀₄, INV₅...) des interrupteurs d'étage final (S₁, S₂) (figures 5 et 6).

4. Montage selon la revendication 3, caractérisé en ce qu'il est prévu un troisième comparateur (K₄) à une entrée (non inverseuse) duquel est appliquée la tension de sortie (U_{sp}) du second comparateur (K₃), cette entrée étant reliée à la masse par l'intermédiaire du montage-série d'une résistance (R₂₆₈) et d'un condensateur (C₂₂₈), ainsi que, par l'intermédiaire d'une résistance (R₂₆₅), à la tension de fonctionnement (+Ub); tandis qu'à l'autre entrée (inverseuse) du troisième comparateur (K₄) est appliquée une tension de référence (U_{R3}), et en ce que la tension de sortie (U'_{sp}) du second comparateur (K3) et la tension de sortie

(U"_{sp}) du troisième comparateur (K4) sont transmises à un circuit OU (R₂₇₀, R₂₇₁, T₂₀₉), dont le signal de sortie (U_{sp}) est appliqué aux montages de commande T₂₀₁, T₂₀₂, INV₄,...; T₂₀₃, T₂₀₄, INV₅... respectivement A₁, A₂, en tant que signal d'inhibition (U_{sp}).

5. Montage selon la revendication 3 ou 4, caractérisé en ce que le second comparateur (K3) comporte, dans sa branche de contre-réaction, un circuit RC série (R₂₆₂, C₂₂₅).

6. Montage selon la revendication 4 ou 5, caractérisé en ce que la constante de temps de la résistance (R₂₆₅), reliée à la tension de fonctionnement, branchée sur l'entrée non inverseuse du troisième comparateur (K₄), et du condensateur (C₂₂₈) est grande par rapport à la constante de temps du premier comparateur (K₃).

7. Montage selon l'une des revendications 4 à 6, caractérisé en ce que la valeur de la résistance (R₂₆₈) du montage série (R₂₆₈, C₂₂₈) à l'entrée non inverseuse du troisième comparateur (K₄) est faible par rapport à la valeur de la résistance (R₂₆₅) aboutissant à la tension de fonctionnement à cette entrée.

8. Montage selon l'une des revendications 4 à 7, caractérisé en ce que la tension de référence (R_{R2}) du second comparateur (K₃) est formée par un diviseur de tension (R₂₆₃, R₂₆₄) qui est relié à la masse et, par l'intermédiaire d'une diode Zener (D₂₁₀), à la tension de fonctionnement (+U_B), cette diode Zener (D₂₁₀) étant, en outre, reliée à un diviseur de tension (R₂₆₆, R₂₆₇) formant la tension de référence (U_{R3}) du troisième comparateur (K₄) et à la résistance (R₂₆₅) aboutissant à l'entrée non inverseuse de ce comparateur.

Fig. 1

Fig. 2

Fig. 3

Fig. 4

Fig. 5

Fig.6